# DEMANDE DE BREVET EUROPEEN

(11) **EP 1 271 395 A1**
(43) Date de publication de la demande: **02.01.2003**
(21) Numéro de dépôt: 01202268.7
(22) Date de dépôt: 13.06.2001
(51) Int. Cl.: G06K 11/08, G06K 11/18

(54) **Dispositif pour la détection de déplacements d'une surface d'un objet**

(71) Demandeur: EM Microelectronic-Marin SA, 2074 Marin (CH)
(72) Inventeur: Tschirren, Pierre, 2074 Marin (CH); Mathieu, Gilles, 34080 Montpellier (FR); Dufresne, Christophe, 25390 Guyans-Vennes (FR); Longa, Giovanni, 2525 Le Landeron (CH)
(74) Mandataire: Laurent, Jean

(57) **Abrégé**

Un dispositif de détection de déplacement, destiné notamment à une souris d'ordinateur ou à un scanneur tenu à la main, comporte une source de lumière (7) associée à un prisme (8) ayant une face réfléchissante non uniformément plane. On obtient ainsi un éclairement aussi uniforme que possible du champ (4) de l'objet dont on veut détecter les déplacements. Un système optique (9) interposé entre ce champ et le capteur optoélectronique (13) fixé sur une carte à circuits imprimés (6) est monté sur un support (12) fixé à cette carte.

## Description

La présente invention concerne un dispositif pour la détection de déplacements d'une surface d'un objet, notamment pour un outil de pointage pour ordinateur, comportant une source de lumière, des moyens de guidage pour diriger la lumière de la source obliquement sur un champ de ladite surface, un capteur optoélectronique pourvu d'un réseau de photodétecteurs, et un système optique pour former une image dudit champ sur le capteur optoélectronique.

Dans le brevet US No 6124587, il est décrit un dispositif de pointage à boule dans lequel les déplacements de la surface de la boule par rotation de celle-ci sont détectés par voie optique, cette surface étant munie d'un dessin formé de points réguliers ou irréguliers. Une petite portion de la surface de la boule, formant un champ défini par une fenêtre fixe et dans lequel on veut détecter les déplacements de la surface de la boule, est éclairée obliquement au moyen de deux diodes électroluminescentes (LED) montées dans un support de part et d'autre d'une lentille. La lumière réfléchie par le champ ainsi éclairé est renvoyée par un miroir associé à la lentille vers un capteur optoélectronique comprenant un réseau de photodétecteurs. Les signaux issus de ce capteur sont traités par des circuits électroniques montés sur une carte à circuits imprimés, pour fournir des informations relatives au déplacement du champ suivant deux composantes dans son plan.

La construction illustrée en particulier par les figures 7 à 12 du brevet susmentionné comporte un boîtier optique en deux pièces servant de monture pour les LED, le miroir, la lentille et le capteur optoélectronique. Le miroir est constitué par une surface réfléchissante sur une face plane de la lentille. Le boîtier est fixé par encliquetage, d'une part au boîtier du guidage de la boule et d'autre part à la carte à circuits imprimés. Le capteur et les LED comportent des pattes métalliques de connexion pour leur raccordement électrique aux circuits imprimés de la carte.

Dans un tel agencement, il est nécessaire d'utiliser deux sources de lumière espacées l'une de l'autre pour obtenir un éclairement suffisamment uniforme du champ observé, afin que la détection de ses déplacements puisse se faire dans de bonnes conditions. La lumière issue des LED est conduite vers ce champ par des canaux respectifs ménagés dans le boîtier optique. Il en résulte que ce boîtier est relativement compliqué et que plusieurs groupes de pattes de connexion sont nécessaires pour la connexion des LED et du capteur à la carte à circuits imprimés.

Un autre inconvénient de cette construction réside dans le coût du miroir, dont le rôle est d'obtenir un chemin coudé de la lumière allant du champ observé au capteur, pour empêcher que celui-ci reçoive de la lumière parasite provenant d'ailleurs.

D'autres inconvénients sont liés au fait que le boîtier optique, assurant un positionnement mutuel précis de tous les composants qu'il supporte, constitue une pièce compliquée nécessitant un moule coûteux pour sa fabrication en série. Si l'on doit modifier l'un des composants ou sa position, il faut créer un nouveau moule, entraînant des frais importants. Par ailleurs, cette construction nécessite une étape de réalisation des nombreuses connexions électriques avec la carte à circuits imprimés après le montage du boîtier optique sur cette carte, ce qui complique la production.

Le brevet US No 5686720 décrit une construction qui évite certains des inconvénients mentionnés ci-dessus. Il s'agit d'un capteur dit de navigation, incorporé dans un scanneur tenu à la main est destiné à mesurer les déplacements du scanneur sur un document. Dans l'exemple illustré par la figure 5 de ce brevet, un petit champ du document est éclairé par une source de lumière à travers un prisme placé juste au-dessus de lui. Le prisme dévie le faisceau lumineux de façon que la lumière arrive sur le papier du document sous un angle faible, typiquement inférieur à 16°. La lumière diffusée par le papier retraverse le prisme et est collimatée vers un réseau de photodétecteurs au moyen d'une surface bombée du prisme, formant une lentille. Ceci permet de monter la source de lumière et le capteur optoélectronique à photodétecteurs directement sur la carte à circuits imprimés. Par contre, cet agencement ne permet pas de protéger efficacement le capteur contre de la lumière parasite provenant de la région du prisme.

La présente invention concerne un dispositif capable d'éviter au moins certains des inconvénients susmentionnés de l'art antérieur, tout en pouvant assurer notamment une détection efficace des déplacements, un positionnement sûr et précis des composants et un coût de fabrication modéré.

A cet effet, l'invention concerne un dispositif du genre indiqué en préambule ci-dessus, caractérisé en ce que les moyens de guidage comportent un prisme ayant une face de réflexion, sur laquelle la lumière de la source subit une réflexion totale, ladite face ayant une forme non-uniformément plane agencée pour concentrer la lumière vers le champ à observer sur la surface de l'objet.

Cette disposition a une double avantage. D'une part le prisme crée un coude dans le chemin de la lumière allant de la source au champ observé, ce qui permet de placer le système optique et le capteur optoélectronique directement en face de ce champ, tandis que la source de lumière peut se trouver à côté du capteur et être fixée sur la même carte à circuits imprimés. Il en résulte une construction très compacte de l'ensemble et une simplification des connexions électriques. D'autre part, une configuration appropriée de la face de réflexion du prisme permet d'uniformiser la distribution de la lumière sur le champ à observer, sans adjonction d'un élément optique supplémentaire.

Dans une forme de réalisation particulièrement simple et peu coûteuse, la face de réflexion du prisme comporte deux surfaces planes formant un angle entre elles. Ceci permet de pallier la divergence du faisceau issu de la source lumineuse en divisant ce faisceau en deux faisceaux partiels orientés vers le champ à observer, de façon à obtenir une distribution correcte de l'éclairement sur celui-ci. En même temps, on peut utiliser un prisme dont toutes les surfaces extérieures sont planes, ce qui simplifie sa fabrication et son positionnement. Toutefois, dans d'autres modes de réalisation, on peut prévoir que la face de réflexion du prisme soit convexe pour former un réflecteur concave capable d'assurer l'uniformité de l'éclairement. Elle pourrait également comporter une série de facettes planes.

D'autres caractéristiques et avantages de la présente invention apparaîtront dans la description suivante d'un mode de réalisation préféré, présenté à titre d'exemple non limitatif en référence aux dessins annexés, dans lesquels :
- la figure 1 est une vue en coupe schématique d'un dispositif de détection de déplacement selon l'invention, pour un outil de pointage pour ordinateur;

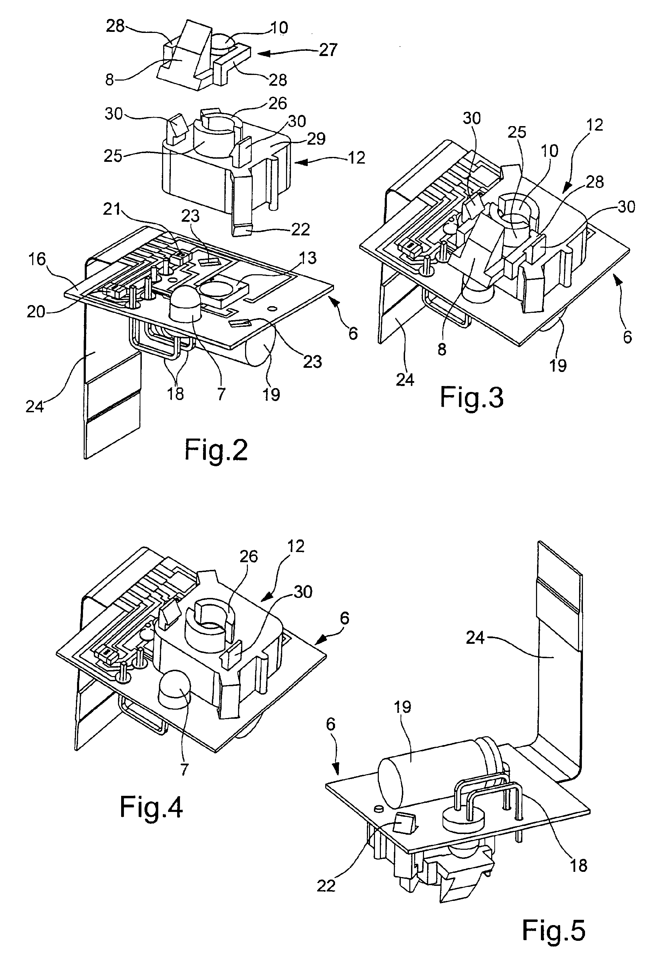

- la figure 2 est une vue éclatée en perspective des principaux composants du dispositif de la figure 1;
- la figure 3 représente l'objet de la figure 2 à l'état assemblé;
- la figure 4 est une vue analogue à la figure 3, dans laquelle on a retiré un élément optique;
- la figure 5 représente en perspective le dessous de l'objet de la figure 3;
- la figure 6 est une vue latérale du prisme représenté à la figure 1;
- la figure 7 est une vue suivant la flèche VII de la figure 6;
- la figure 8 représente schématiquement l'effet optique du prisme, et
- la figure 9 est un diagramme de la distribution de l'éclairement E le long d'une direction longitudinale X du champ de détection des déplacements.

Le dispositif représenté dans les dessins est destiné à être intégré à un appareil de pointage à boule rotative du type "trackball", par exemple du type décrit dans le brevet US No 6124587, auquel le lecteur se référera pour ce qui concerne les autres caractéristiques structurelles et fonctionnelles d'un tel appareil. On notera toutefois que le dispositif selon l'invention peut aussi trouver des applications dans d'autres appareils, en particulier des souris d'ordinateur sans boule, où l'on détecte les déplacements relatifs entre la souris et la surface plane d'une table ou d'un tapis de souris, ou encore un scanneur à main du genre décrit dans le brevet US No 5686720.

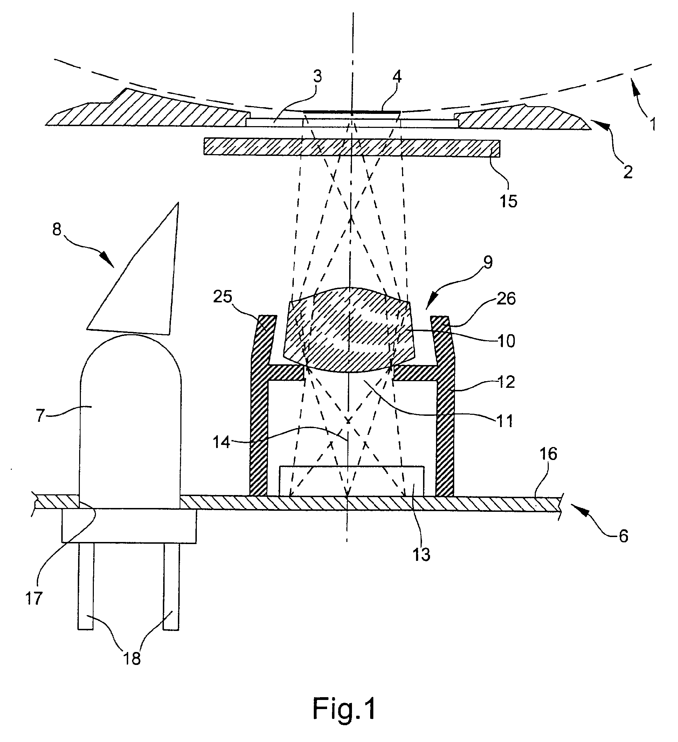

Dans l'exemple décrit ici, l'objet dont les déplacements sont détectés est une boule 1 dont la surface porte de manière connue un dessin formé de lignes ou de points. La boule 1 est rotative dans un boîtier 2 représenté uniquement schématiquement dans la figure 1 et comportant une fenêtre transparente 3 derrière laquelle apparaît un champ objet 4 de la surface de la boule 1. Le champ 4 étant de petite taille, avec un diamètre d'environ 2,8 mm, on peut le considérer comme approximativement plan. Le dispositif de détection représenté schématiquement à la figure 1 est monté à l'intérieur du boîtier 2. Il comporte une carte à circuits imprimés 6 qui est fixée dans le boîtier 2 et supporte l'ensemble du dispositif décrit ici, notamment une diode électroluminescente (LED) 7 formant l'unique source de lumière du dispositif, un prisme 8 agencé pour diriger la lumière de la LED 7 vers le champ objet 4, un système optique 9 formé ici d'une lentille 10 et d'un diaphragme 11, un support 12 du système optique et un capteur optoélectronique 13 constitué de manière connue par un circuit intégré pourvu d'un réseau de photodétecteurs à sa surface supérieure. Le système optique 9 est agencé pour former une image du champ 4 sur ce réseau. Ce système disposé en face de la fenêtre 3 et présente un axe optique rectiligne 14 perpendiculaire au champ 4. On obtient ainsi pour le capteur 13 une bonne qualité de l'image du champ 4 avec des moyens très simples. Une plaque transparente de protection 15 peut être placée devant la fenêtre 3.

La carte à circuits imprimés 6 est une carte à simple face, c'est-à-dire que tous les circuits imprimés se trouvent sur sa surface supérieure 16, ce qui réduit le coût de fabrication de la carte et de montage des composants sur celle-ci. Le capteur 13 est monté directement sur la face 16 de la carte par la méthode du "chip-on-board" (COB), assurant des connexions électriques directes. La LED 7 est insérée par-dessous dans un trou 17 de la carte 6, qui la maintient fermement dans une position précise. Ses deux pattes de connexion électriques 18 sont recourbées vers le haut pour s'engager dans deux autres trous de la carte et pouvoir être raccordées aux circuits imprimés par soudure sur la face supérieure 16 de la carte. Un condensateur 19 fixé sur la face inférieure de la carte 6 est connecté électriquement de la même façon.

Les autres composants électriques tels que 20, 21 du dispositif sont montés sur la face supérieure 16 de la carte. Les circuits imprimés de la carte 6 sont raccordés aux autres circuits électriques de l'appareil au moyen d'un câble plat 24.

Le support 12 du système optique est constitué par une pièce en plastique moulé qui est fixée par encliquetage sur la carte 6, grâce à deux ergots à crochets élastiques 22 s'engageant dans des trous 23 de la carte. Ceci assure un positionnement précis du support 12, lequel recouvre et protège en outre le capteur 13. Au-dessus du diaphragme 11, le support 12 comporte deux parois latérales incurvées 25 et 26 faisant écran autour de la lentille 10 pour empêcher qu'elle reçoive de la lumière parasite. D'une façon générale, le support 12 forme un boîtier empêchant que le capteur 13 reçoivent de la lumière provenant d'ailleurs que du champ à observer.

Le prisme 8 et la lentille 10 sont avantageusement réalisés sous la forme d'une même pièce moulée 27 en matière synthétique transparente, par exemple en polycarbonate ou en PMMA, cette pièce comprenant deux bras latéraux 28 reliant rigidement le prisme à la lentille. Cette pièce 27 est montée par encliquetage sur la surface supérieure 29 du support 12, lequel est muni de deux crochets élastiques 30 s'accrochant aux bras 28 pour fixer la pièce 27 par encliquetage. Ce mode de fixation et la forme coudée à angle droit des bras 28 s'engageant entre les deux parois 25 et 26 du support garantissent un positionnement précis des deux éléments optiques 8 et 10 par rapport aux autres composants du dispositif. De plus, le coût de fabrication de la pièce moulée 27 est faible et le montage est extrêmement simple.

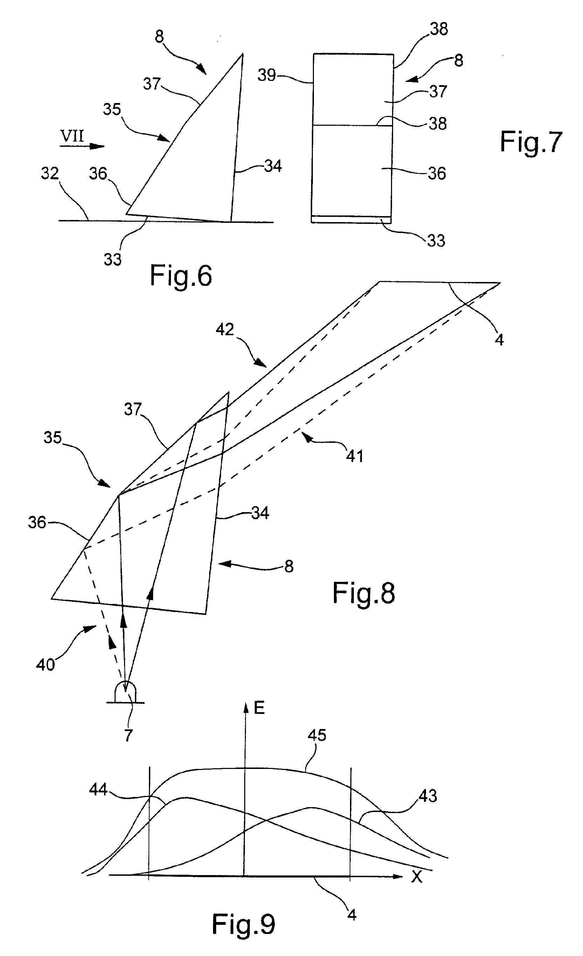

On décrira maintenant la forme préférée et la fonction du prisme 8 en référence aux figures 6 à 9. Dans la figure 6, la position du prisme est représentée par rapport à un plan de référence 32 qui est parallèle à la carte à circuits imprimés 6 et au plan du champ objet 4. Toutes les surfaces extérieures du prisme sont planes. La face d'entrée 33 du prisme est inclinée d'environ 3,47° par rapport au plan 32. La face de sortie 34 est inclinée d'environ 86,7° par rapport à ce plan. La troisième face 35 est une face de réflexion comprenant deux surfaces planes 36 et 37 qui se raccordent le long d'une arête 38 en formant entre elles un angle relativement faible, en l'occurrence environ 6,5°. Dans l'exemple représenté, l'inclinaison de la surface 36 par rapport au plan 32 est d'environ 57,26° et celle de la surface 37 est d'environ 50,71°. Les faces latérales 39 du prisme sont parallèles dans le cas présent, mais elles pourraient aussi être légèrement convergentes vers le haut afin de diriger la lumière qui subit des réflexions totales sur ces faces.

Comme le montre schématiquement la figure 8, un faisceau lumineux 40 provenant de la LED 7 entre dans le prisme par la face inférieure 33 de celui-ci et subit une réflexion totale sur la face de réflexion 35 du prisme. Les deux surfaces planes 36 et 37 de cette face, ayant des inclinaisons différentes, divisent le faisceau 40 en deux faisceaux partiels 41 et 42 dont l'un est dessiné en trait interrompu et l'autre en trait continu. Après réfraction sur la face de sortie 34 du prisme 8, les deux faisceaux vont sur le champ objet 4 pour l'éclairer.

Le diagramme de la figure 9 représente la distribution de l'éclairement E ainsi obtenu sur le champ objet 4, en fonction de l'abscisse dans la direction longitudinale X du champ 4. La courbe 43 représente l'éclairement produit par le faisceau 41, et la courbe 44 celui produit par le faisceau 42. La courbe 45, représentant l'éclairement total produit par les deux faisceaux, montre une excellente uniformité de l'éclairement sur la longueur du champ 4. Ceci assure une très bonne réponse du réseau de photodétecteurs du capteur 13 et permet un traitement simple des signaux de sortie des photodétecteurs.

Il faut noter qu'une bonne uniformité de l'éclairement du champ 4 pourrait aussi être obtenue avec une forme bombée ou à facettes de la face de réflexion 35 du prisme 8.

La description qui précède montre que la présente invention permet de réaliser un dispositif de détection simple et robuste, qui peut être fabriqué en série pour un faible coût tout en offrant de bonnes performances. De plus, si l'un des composants du dispositif doit être modifié dans une production en série, cela peut se faire sans difficulté, ni coût important, puisque les modifications nécessaires peuvent être opérées simplement sur la carte à circuits imprimés ou, le cas échéant, sur le support 12 ou la pièce optique 27, sans changer les autres éléments du dispositif.

## Revendications

1. Dispositif pour la détection de déplacements d'une surface d'un objet, notamment pour un outil de pointage pour ordinateur, comportant une source de lumière (7), des moyens de guidage (8) pour diriger la lumière de la source obliquement sur un champ (4) de ladite surface, un capteur optoélectronique (13) pourvu d'un réseau de photodétecteurs, et un système optique (9) pour former une image dudit champ sur le capteur optoélectronique,
**caractérisé en ce que** les moyens de guidage comportent un prisme (8) ayant une face de réflexion (35), sur laquelle la lumière de la source subit une réflexion totale, ladite face ayant une forme non uniformément plane agencée pour concentrer la lumière vers ledit champ (4).

2. Dispositif selon la revendication 1, **caractérisé en ce que** la face de réflexion du prisme comporte deux surfaces planes (36, 37) formant un angle entre elles.

3. Dispositif selon la revendication 1, **caractérisé en ce que** toutes les surfaces du prisme sont planes.

4. . Dispositif selon la revendication 1, **caractérisé en ce que** la face de réflexion du prisme est convexe vers l'extérieur du prisme

5. Dispositif selon la revendication 1, **caractérisé en ce qu'**il comporte une carte à circuits imprimés (6) sur laquelle sont montés la source de lumière (7) et le capteur optoélectronique (13).

6. Dispositif selon la revendication 5, **caractérisé en ce que** ledit système optique (9) est monté sur un support (12) qui est fixé sur la carte à circuits imprimés (6).

7. Dispositif selon la revendication 6, **caractérisé en ce que** le prisme (8) est monté sur le support (12) du système optique.

8. Dispositif selon la revendication 7, **caractérisé en ce qu'**une lentille (10) du système optique et le prisme (8) font partie d'une même pièce moulée (27) montée sur le support (12) du système optique.

9. Dispositif selon la revendication 6, **caractérisé en ce que** le support (12) du système optique comporte une paroi (25) formant un écran entre le prisme et le système optique.
